# DEMANDE DE BREVET EUROPEEN

(11) **EP 1 089 034 A1**
(43) Date de publication de la demande: **04.04.2001**
(21) Numéro de dépôt: 00402458.4
(22) Date de dépôt: 06.09.2000
(51) Int. Cl.: F21S 8/12, F21V 8/00, B60Q 1/00

(54) **Module d'éclairage à conduit de lumière pour véhicule automobile**

(30) Priorité: 30.09.1999 FR 9912225; 30.09.1999 FR 9912227
(71) Demandeur: VALEO VISION, 93012 Bobigny Cédex (FR)
(72) Inventeur: Delattre, Hugo, 93012 Bobigny Cedex (FR)
(74) Mandataire: Hervouet, Sylvie

(57) **Abrégé**

L'invention concerne un projecteur (1000) pour véhicule automobile, comprenant une source lumineuse qui éclaire l'extrémité d'un conduit de lumière (1100) comprenant une pluralité de lames transparentes juxtaposées (1110, 1120, 1130) définissant une pluralité de facettes de réflexion obliques coopérant avec des lentilles.

Selon l'invention, les lames transparentes sont collées entre elles en des endroits ponctuels. De préférence, chaque point de colle présentant un diamètre compris environ entre 3 et 5 mm.

## Description

La présente invention concerne de manière générale les projecteurs de véhicule automobile.

Elle concerne plus particulièrement un projecteur du type de celui décrit dans le brevet français n° 96 12972 publié sous le n° 2 755 210, et la demande de brevet français n° 97 09210 publiée sous le n° 2 766 257, appartenant à la Demanderesse.

Ce projecteur comprend une source lumineuse réelle, des moyens pour concentrer le rayonnement lumineux issu de cette source sur l'extrémité d'un conduit de lumière comportant une pluralité de lames transparentes juxtaposées selon au moins une direction, chaque lame transparente s'étendant selon l'axe longitudinal du conduit de lumière et comportant, au moins à son extrémité la plus éloignée de la source lumineuse réelle, une facette de réflexion oblique, lesdites facettes constituant autant de sources lumineuses virtuelles et étant disposées de manière à coopérer optiquement avec des éléments dioptriques d'axe parallèle à la direction d'éclairement pour que ceux-ci projettent dans cette direction, des images correspondant aux facettes.

L'assemblage des lames transparentes du conduit de lumière d'un tel projecteur est une opération délicate compte tenu du nombre de lames à assembler, du positionnement précis des facettes de réflexion, et de la fragilité desdites lames réalisées préférentiellement en verre, cette fragilité se situant surtout au niveau de leurs arêtes.

La présente invention propose alors un nouveau projecteur du type précité, dans lequel il est prévu un moyen simple d'assemblage préalable des lames entre elles de façon à constituer un ensemble de lames monobloc facile à manipuler pour être monter sur un support de lames.

Plus particulièrement, dans le projecteur selon l'invention les lames transparentes sont collées entre elles en des endroits ponctuels.

De préférence, chaque point de colle présente un diamètre compris environ entre 3 et 5 mm.

Selon un mode de réalisation préférentiel du projecteur conforme à l'invention, les lames transparentes présentant des longueurs différentes, la lame transparente supérieure la plus courte est collée par un point de colle sur la lame transparente inférieure, chaque lame transparente intermédiaire étant collée sur une autre lame par deux points de colle situés à chaque extrémité de ladite lame.

Lesdites lames transparentes sont réalisées en verre.

La colle utilisée est avantageusement une colle monocomposant réticulable au rayonnement ultraviolet, à l'humidité ou à la chaleur. Elle peut être une colle époxy ou une colle silicone.

En outre, la présente invention propose un nouveau projecteur du type précité, dans lequel il est prévu un système de montage du conduit de lumière assurant un bon positionnement des facettes, et de la face de sortie de lumière de ce dernier vis-à-vis des éléments dioptriques de sorte que ceux-ci projettent dans la direction d'éclairement des images correspondant aux facettes bien positionnées dans le faisceau d'éclairement, ainsi qu'un bon positionnement de la face d'entrée du conduit de lumière par rapport à la source lumineuse, et dans lequel il est prévu un moyen simple d'assemblage préalable des lames entre elles de façon à constituer un ensemble de lames monobloc facile à manipuler pour être monter sur un support de lames.

Plus particulièrement, le projecteur selon l'invention comporte une pièce de référence pour le montage dudit conduit de lumière, et au moins une pince apte à serrer lesdites lames transparentes juxtaposées contre ladite pièce de référence pour former un ensemble monobloc.

Avantageusement, la pièce de référence comprend une première partie généralement plane horizontale définissant un plan de référence horizontal, et une deuxième partie généralement plane verticale, s'étendant suivant l'axe longitudinal du conduit de lumière et définissant un plan de référence vertical, et chaque pince comprend une première surface interne opposée à ladite première partie généralement plane horizontale, et une deuxième surface interne opposée à ladite deuxième partie généralement plane verticale, lesdites première et deuxième surfaces internes de chaque pince comportant un bossage exerçant une force de poussée sur les lames transparentes juxtaposées dudit conduit de lumière pour les maintenir en appui contre les première et deuxième parties généralement planes de ladite pièce de référence, dans une position déterminée selon l'axe longitudinal dudit conduit de lumière, de sorte que leur(s) facette(s) de réflexion coopèrent optiquement avec lesdits éléments dioptriques pour que les images des facettes projetées par ceux-ci dans la direction d'éclairement soient positionnées de manière déterminée.

Ainsi, avantageusement selon l'invention, les lames transparentes constituant le conduit de lumière, sont en appui sur deux plans de référence horizontal et vertical matérialisés par les première et deuxième partie planes de la pièce de référence. On s'affranchit alors des problèmes optiques liés aux tolérances de fabrication desdites lames, les facettes de réflexion desdites lames étant positionnées de façon déterminée en référence sur le plan de référence horizontal, et leur face de sortie de lumière étant placée de manière déterminée en référence sur le plan vertical.

D'autres caractéristiques avantageuses et non limitatives du projecteur selon l'invention sont énoncées ci-après.

La première partie plane horizontale de la pièce de référence est une partie supérieure contre laquelle s'appuie au moins une partie de la surface supérieure du conduit de lumière et la deuxième partie plane verticale de la pièce de référence est une partie avant ajourée contre laquelle s'appuient les faces avant de sortie de la lumière des lames transparentes du conduit de lumière, et les première et deuxième surfaces internes de chaque pince sont respectivement une surface horizontale inférieure venant en appui contre la surface inférieure du conduit de lumière, et une surface verticale arrière venant en appui contre les faces arrières des lames transparentes.

Chaque pince est une lame ressort conformée en « U » avec une branche supérieure positionnée contre la face externe de la première partie plane horizontale de la pièce de référence, et une branche inférieure positionnée contre la face inférieure du conduit de lumière.

Les bossages viennent de formation avec chaque pince, ou sont rapportés sur chaque pince.

Chaque pince vient de formation avec la pièce de référence.

Il est prévu un élément souple compressible entre le conduit de lumière et la première partie plane horizontale de la pièce de référence. Cet élément souple compressible est un patin de silicone apte à être comprimé d'environ 20% de son épaisseur sous l'effet du pincement de la pièce de référence et desdites lames transparentes dans chaque pince.

La première partie plane horizontale de la pièce de référence, comporte une partie plane haute et une partie plane basse horizontales, parallèles et raccordées par un décrochement, chaque pince agissant sur ladite partie plane basse et sur le conduit de lumière. La partie plane haute horizontale de la pièce de référence présente un bord d'extrémité en biais qui porte une pige pour le positionnement selon l'axe longitudinal du conduit de lumière, de la lame transparente directement en appui contre la partie plane haute horizontale de ladite pièce de référence.

Les lames transparentes sont collées à chaque pince et/ou à la pièce de référence.

La pièce de référence est réalisée par moulage en aluminium. Chaque pince est également réalisée avantageusement par moulage en aluminium.

La description qui va suivre, en regard des dessins annexés, donnés à titre d'exemples non limitatifs, fera bien comprendre en quoi consiste l'invention, et comment elle peut être réalisée.

Sur les dessins annexés :
- la figure 1 est une vue partielle schématique en perspective du principe d'un projecteur selon l'invention,
- la figure 2 est une vue en coupe dans un plan vertical du projecteur de la figure 1,
- la figure 3 est une vue de face de l'extrémité du conduit de lumière du projecteur des figures 1 et 2,
- la figure 4 est une vue schématique d'une lame transparente inclinée de sorte que sa face avant de sortie de lumière ne soit plus verticale,
- la figure 5 est une vue schématique en perspective d'une réalisation pratique du projecteur du type de celui représenté sur la figure 1,
- la figure 6 est une vue de dessus en perspective de la platine de montage sur laquelle sont positionnées les lames transparentes superposées du projecteur de la figure 5,
- la figure 7 est une vue schématique de côté du projecteur selon l'invention, et
- la figure 8 est une vue en coupe selon le plan A-A de la figure 7.

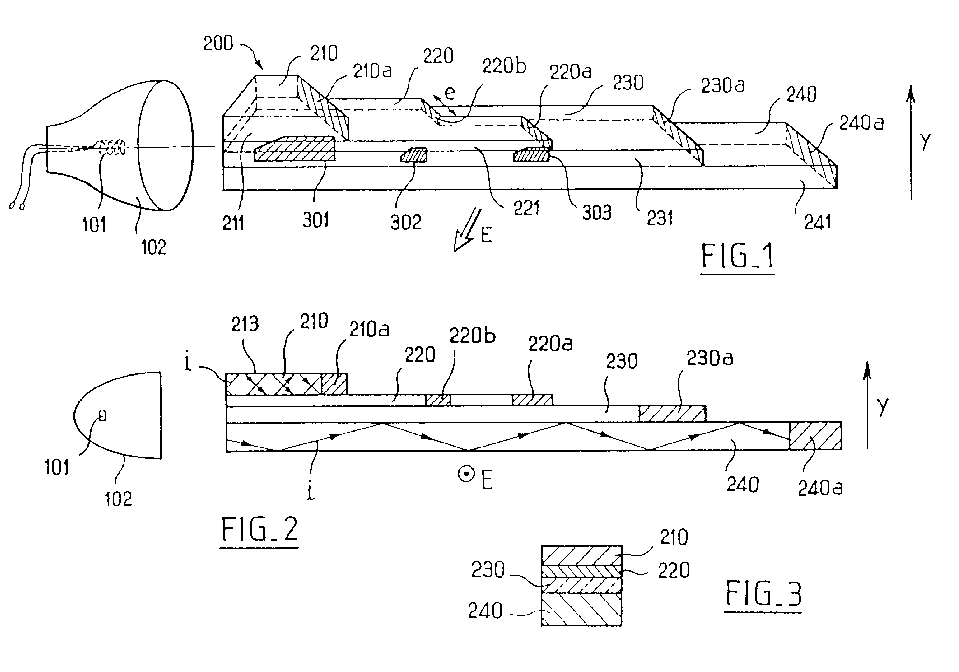

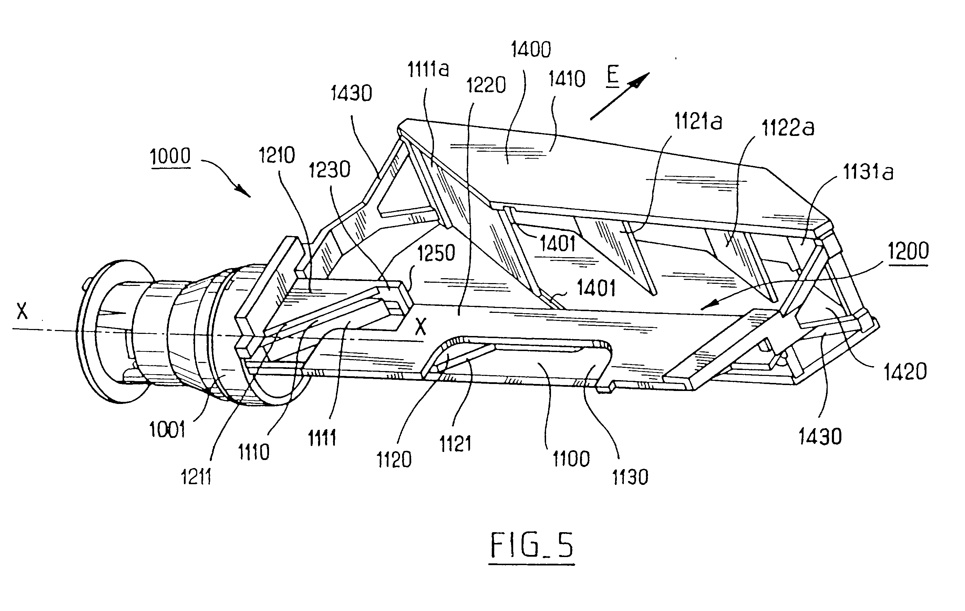

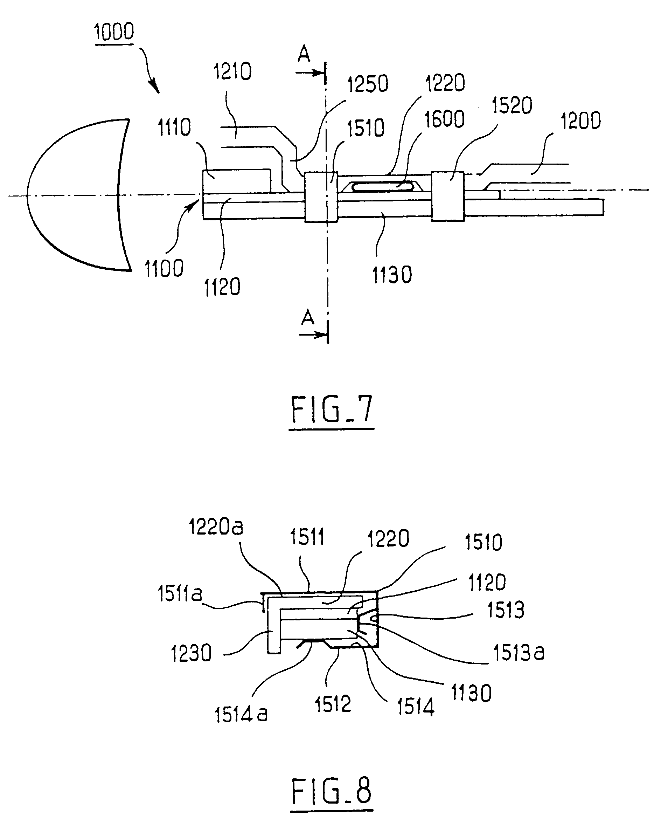

En référence aux figures 1 à 4, nous allons tout d'abord décrire de façon générale le principe du projecteur selon l'invention, puis en référence aux figures 5 et 6 nous allons décrire une réalisation pratique d'un tel projecteur.

Sur les figures 1 à 3 de la présente demande de brevet, on a représenté un projecteur de véhicule automobile qui comprend une source lumineuse réelle 101 et des moyens 102 pour concentrer le rayonnement lumineux issu de cette source sur l'extrémité d'un conduit de lumière 200.

Les moyens de concentration du rayonnement lumineux émis de la source lumineuse réelle 101, sont constitués essentiellement par un réflecteur ou miroir elliptique 102, la source lumineuse 101 étant constituée par le filament d'une lampe d'automobile, disposée de préférence dans l'axe du réflecteur elliptique 102, à un de ses foyers.

Le flux lumineux issu de la source lumineuse réelle 101 est réfléchi par le réflecteur elliptique 102 selon un ensemble de rayons qui converge vers la zone focale du deuxième foyer dudit réflecteur elliptique.

On pourra prévoir que le réflecteur elliptique 102 soit muni d'une ouverture (ici non représentée) constituant une fenêtre de lumière laissant passer directement les rayons issus de la source lumineuse réelle.

Dans l'axe du réflecteur elliptique 102 s'étend le conduit de lumière 200.

Ce conduit de lumière 200 comporte une pluralité de lames transparentes, ici de différentes longueurs, juxtaposées selon au moins une direction chaque lame transparente s'étendant suivant l'axe longitudinal du conduit de lumière 200 et sensiblement transversalement à la direction d'éclairement E.

Dans cet exemple de réalisation, l'axe longitudinal du conduit de lumière s'étend horizontalement.

Le conduit de lumière 200 comporte ici quatre lames transparentes 210, 220, 230, 240, de différentes longueurs, ici superposées selon la direction Y verticale et transversale à l'axe du conduit de lumière et à la direction d'éclairement E.

De façon préférentielle, chaque lame transparente est réalisée en verre.

Chaque lame transparente 210, 220,230, 240 comporte à son extrémité la plus éloignée de la source lumineuse réelle 101, une facette de réflexion oblique 210a, 220a, 230a,240a, lesdites facettes étant disposées de manière à coopérer optiquement avec des éléments dioptriques, ici des lentilles non représentées, d'axe parallèle à la direction d'éclairement pour que ces lentilles projettent dans cette direction des images correspondant aux facettes.

En effet, à l'avant du système optique ainsi défini ci-dessus, il est prévu un ensemble d'éléments dioptriques, lentilles convergentes (non représentées sur les figures 1 à 4) dont les axes sont sensiblement parallèles à la direction d'éclairement E. Les lentilles sont disposées en relation de coopération optique avec les facettes 210a, 220a, 220b, 230a, 240a qui sont sensiblement disposées au foyer des lentilles.

Chaque lame transparente comporte une face d'entrée de la lumière s'étendant transversalement à l'axe longitudinal du conduit de lumière. L'ensemble des faces d'entrée de la lumière desdites lames constitue la face d'entrée du conduit de lumière (voir figure 3). Chaque lame transparente 210,220, 230, 240 comporte en outre une face de sortie de lumière 211, 221, 231, 241 qui, selon le mode de réalisation représenté sur les figures 1 et 2 s'étend verticalement et perpendiculairement à la direction d'éclairement repérée par la flèche E.

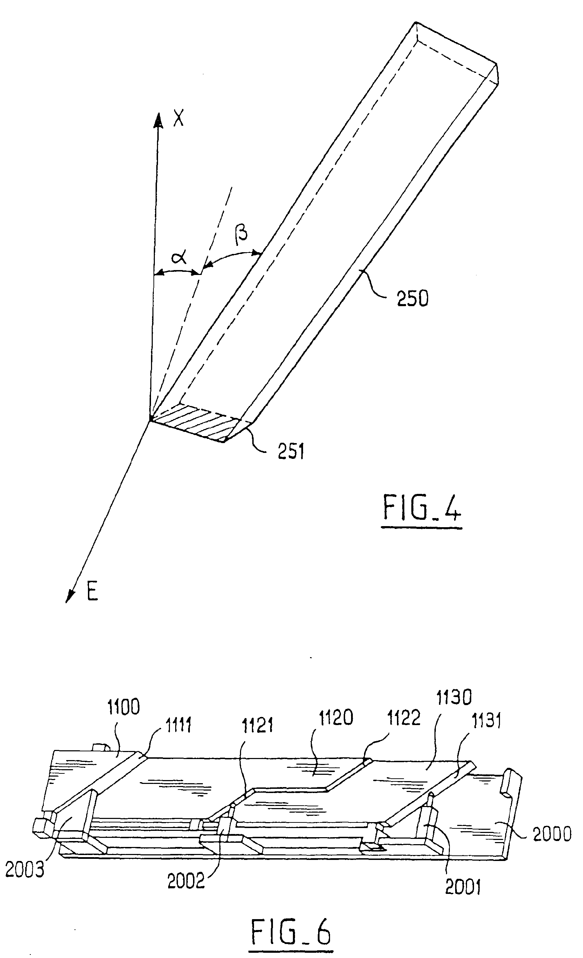

Bien entendu, selon une variante de réalisation représentée plus particulièrement sur la figure 4, on peut prévoir que la face de sortie de la lumière de chaque lame transparente 250 présente une inclinaison α, β par rapport à l'axe vertical et donc une inclinaison d'un angle β différent de 90 degrés par rapport à la direction d'éclairement E.

En outre, il est possible, comme le montre les figures 1 et 2, qu'une ou plusieurs lames transparente(s) comporte(nt) d'autres facettes de réflexion 220b, ces facettes 220b étant délimitées par des décrochements de hauteur égale à e, prévus dans la partie arrière de chaque lame, comme cela est le cas en particulier de la lame transparente 220.

Les facettes de réflexion 210a, 220a, 220b, 230a, 240a du conduit de lumière 200 sont inclinées par rapport à la direction d'éclairement E, leur inclinaison étant comprise entre 35 et 55 degrés, et de préférence égale à 45 degrés.

On se reportera par exemple au mode de réalisation représenté sur la figure 3c du brevet n° 2 514 105 appartenant à la Demanderesse, selon lequel on peut voir que pour un indice de réfraction de 1,7, on atteint un optimum pour un angle de facettes de 53 degrés par rapport à la direction d'éclairement E.

En particulier, selon le mode de réalisation représenté sur la figure 4, la lame transparente présentant une inclinaison différente de 90 degrés par rapport à la direction d'éclairement E, nécessairement la facette de réflexion 251 associée présente une inclinaison par rapport à la verticale différente de 45 degrés pour réfléchir un faisceau lumineux dans la direction d'éclairement.

Avantageusement, pour éviter les pertes de flux lumineux par réfraction, il peut être prévu que les faces internes latérales, avant et arrière de chaque lame transparente soient revêtues d'un revêtement réfléchissant.

En particulier, les interfaces entre les lames transparentes peuvent être aluminées.

Comme cela a déjà été décrit dans le brevet d'invention n° 2 514 105, il peut être prévu une lentille convergente disposée en regard de la fenêtre prévue dans le miroir elliptique 102 en relation de coopération optique avec la source lumineuse réelle 101 qui est sensiblement à son foyer.

De plus, on peut prévoir un miroir semi-réfléchissant disposé au deuxième foyer du miroir elliptique 101 entre la source lumineuse et l'entrée du conduit de lumière 200 formée par la juxtaposition, ici la superposition, des faces d'entrée des lames transparentes le constituant.

Dans ce cas, il est prévu une lentille convergente disposée de la même manière que les lentilles associées aux facettes des lames transparentes, en relation de coopération optique avec le miroir semi-réfléchissant qui est sensiblement disposé au foyer de cette lentille convergente.

Avec la disposition précitée, le flux lumineux issu de la source de lumière réelle 101, réfléchi par le miroir elliptique 102, pénètre dans le conduit de lumière et dans chaque lame transparente 210, 220, 230, 240 le constituant par leur section d'entrée respective et s'y trouve réfléchi, dans un régime de réflexion totale, par les facettes 210a, 220a, 220b, 230a, 240a associées.

Les faisceaux élémentaires réfléchis sont repris par les lentilles (non représentées sur les figures 1 à 4) qui projettent vers l'avant du projecteur les faisceaux lumineux correspondants.

De même, le flux lumineux intercepté par le miroir semi-réfléchissant interposé entre la source lumineuse et l'entrée de conduit de lumière est repris par la lentille associée et le flux lumineux direct passant par la fenêtre du miroir elliptique est repris par la lentille associée.

Avec une telle disposition, il est possible de maîtriser l'éclairement de chaque facette puisque le flux rentrant dans une lame transparente est conduit forcément jusqu'à la facette réfléchissante située à l'extrémité de ladite lame. Chaque lame transparente constitue un conduit de lumière individuel pour une facette du conduit de lumière du projecteur selon l'invention.

On peut doser l'éclairement de chaque facette par le dosage d'éclairement de chaque lame transparente portant ladite facette et former ainsi le faisceau lumineux final prévu.

En projection, chaque facette à réflexion totale 210a, 220a, 220b, 230a, 240a, donne sur un écran, à travers la lentille correspondante une image correspondant au flux d'entrée reçu par la facette et projeté selon la direction E, l'image virtuelle donnée par chaque facette ayant une largeur égale au côté de la face d'entrée de la lame transparente correspondante et une hauteur égale à la hauteur de la lame ou à la hauteur du décrochement e (en ce qui concerne la facette 220b de la lame 220).

Les différents faisceaux élémentaires se fondent en un faisceau d'émission unique et par une disposition judicieuse des axes des lentilles plus ou moins décalés par rapport aux axes des faisceaux élémentaires qu'elles interceptent, on peut réaliser toute disposition d'éclairement, pour un éclairement global pour véhicule automobile.

En particulier, on peut faire en sorte que les images projetées en correspondance avec les différentes facettes soient superposées ou juxtaposées et l'on peut, de même superposer à ces images ou juxtaposer à ces images, celles qui proviennent de la fenêtre du miroir elliptique ou du miroir semi-réfléchissant.

Pour réaliser un faisceau de coupure, comme le montre plus particulièrement la figure 1, il est prévu des caches 301, 302, 303 disposés sur le trajet de certains faisceaux élémentaires d'au moins certaines facettes 210a, 220a, 200b, ici sur la face avant des lames transparentes correspondantes.

Selon une variante non représentée, on peut prévoir que ces caches soient directement posés sur les facettes concernées.

En outre, selon une autre variante, on peut aussi prévoir que certaines facettes présentent le profil correspondant à la forme de la coupure désirée.

Sur la figure 5, on a représenté un projecteur 1000 pour véhicule automobile, du même type que celui décrit précédemment.

Il comporte un réflecteur ou miroir elliptique 1001, la source lumineuse étant constituée par le filament d'une lampe d'automobile, disposée de préférence dans l'axe du réflecteur elliptique 1001, à un de ces foyers.

Le conduit de lumière 1100 du projecteur 1000 est pourvu d'une pluralité de facettes de réflexion obliques 1111, 1121, 1122 et 1131 (voir plus particulièrement la figure 6) qui coopèrent avec une pluralité d'éléments dioptriques 1111a, 1121a, 1122a, 1131a, ici des lentilles de Fresnel, homologues, d'axes parallèles à la direction d'éclairement E.

Comme on peut le voir plus particulièrement sur la figure 6, le conduit de lumière 1100 est constitué par trois lames transparentes 1110, 1120, 1130, ici de différentes longueurs, superposées selon la direction verticale et transversale à l'axe longitudinal X du conduit de lumière et à la direction d'éclairement E.

Chaque lame transparente est également réalisée en verre.

Chaque lame transparente 1110, 1120, 1130, comporte à son extrémité la plus éloignée de la source lumineuse réelle, une facette de réflexion oblique 1111, 1122, 1131. La lame transparente intermédiaire comporte également une autre facette de réflexion 1121, délimitée par un décrochement prévu dans la partie arrière de celle-ci.

Ces facettes de réflexion obliques 1111, 1121, 1222, 1131, sont inclinées par rapport à la direction d'éclairement E, leur inclinaison étant comprise entre 35 et 55 degrés, en fonction du positionnement de l'axe longitudinal du conduit de lumière par rapport à la direction d'éclairement.

Chaque lame transparente comporte à son extrémité opposée aux facettes, une face d'entrée de la lumière s'étendant transversalement à l'axe longitudinal du conduit de lumière. L'ensemble des faces d'entrée de la lumière des lames transparentes constitue la face d'entrée du conduit de lumière. Chaque lame transparente comporte en outre une face de sortie de lumière qui est ici une face avant s'étendant sur un côté longitudinal de la lame transparente, verticalement et sensiblement perpendiculairement à la direction d'éclairement E.

Le projecteur 1000 comporte par ailleurs une pièce de référence 1200 pour le montage dudit conduit de lumière 1100.

Cette pièce de référence 1200 comprend une première partie généralement plane horizontale 1210, 1220, qui s'étend suivant l'axe longitudinal X du conduit de lumière 1100 et qui définit un plan de référence horizontal. La pièce de référence 1200 comporte également une deuxième partie généralement plane verticale 1230, qui s'étend perpendiculairement à ladite première partie plane 1210, 1220 et qui définit un plan de référence vertical.

Les lames transparentes 1110, 1120, 1130, juxtaposées du conduit de lumière sont montées en appui contre les première et deuxième parties planes 1210, 1220, 1230 de ladite pièce de référence 1200, dans une position déterminée selon l'axe longitudinal X du conduit de lumière 1100 de sorte que leurs facettes de réflexion obliques coopèrent avec les lentilles de Fresnel associées 1111a, 1121a, 1122a, 1131a pour que celles-ci projettent dans la direction d'éclairement E des images correspondant aux facettes à un endroit déterminé dans le faisceau d'éclairement.

Il convient de préciser que dans un projecteur à conduit de lumière à lames transparentes, rien n'est prévu pour assurer l'introduction de la lumière à la hauteur voulue sur les faces d'entrée des lames transparentes. Le profil d'éclairement en face d'entrée du conduit de lumière n'est pas uniforme mais présente une forte concentration sur une zone approximativement circulaire de quelques millimètres de diamètre qui doit être centrée sur l'interface des lames 1110 et 1120. La dispersion de la lumière sur l'épaisseur des lames associée aux tolérances de fabrication du verre plat pour la formation des lames, ne permet pas a priori de garantir que cette zone à fort niveau d'éclairement soit correctement positionnée par rapport à cette interface, ce qui pénalise alors la qualité du faisceau lumineux obtenu.

La face supérieure de la lame transparente intermédiaire 120 du conduit de lumière, est calée sur la face interne de la première partie plane horizontale 1220 de la pièce de référence 1200 et la lame transparente supérieure 1110 repose sur la lame intermédiaire 1120.

Ainsi, l'interface de ces deux lames est parfaitement positionnée de manière déterminée par rapport à la pièce de référence 1220 et le montage indexé du réflecteur sur la pièce de référence permet alors de s'affranchir de l'inconvénient précité.

La pièce de référence 1200 est ici une pièce monobloc, mais selon une variante de réalisation non représentée on pourra prévoir que cette pièce de référence soit réalisée en plusieurs parties assemblées entre elles. Sa première partie plane généralement horizontale est une partie supérieure comprenant une partie haute 1210 et une partie basse 1220 horizontales, parallèles, et raccordées par un décrochement 1250.

La surface supérieure du conduit de lumière 1200 s'appuie contre la face interne de cette première partie généralement plane horizontale de la pièce de référence. Plus particulièrement, la face supérieure de la lame transparente la plus courte 1110 s'appuie contre la face interne de la partie haute 1210 de la première partie plane horizontale de la pièce de référence, et la surface supérieure de la partie débordante de la lame transparente intermédiaire 1120 située juste en dessous de la lame transparente la plus courte, s'appuie contre la face interne de la partie plane basse 1220 de la première partie horizontale de la pièce de référence 1200. La partie haute de la première partie plane horizontale de la pièce de référence comporte un bord qui s'étend en biais (par rapport à l'axe longitudinal X) à partir du décrochement 1250 jusqu'à son extrémité située côté réflecteur. Ce bord en biais porte une pige qui s'étend en saillie en direction du conduit de lumière. Cette pige permet le positionnement selon l'axe longitudinal du conduit de lumière, de la lame transparente directement en appui contre la partie plane haute de ladite pièce de référence 1200, ici la lame transparente la plus courte 1110.

La deuxième partie plane verticale 1230 de la pièce de référence 1200 est une partie avant ajourée selon un profil particulier fonction de la longueur et du positionnement des facettes de réflexion obliques des lames transparentes, contre laquelle s'appuient les faces avant de sortie de la lumière des lames transparentes du conduit de lumière.

La pièce de référence 1200 comporte un cadre, ici de forme générale circulaire, pour le montage du réflecteur elliptique 1101 portant la source lumineuse réelle. La longueur de la lame supérieure la plus courte 1110 du conduit de lumière est telle que le deuxième foyer du réflecteur elliptique monté dans le cadre circulaire, est situé à l'extrémité de ladite lame transparente supérieure portant la facette de réflexion oblique 1111, ceci afin d'obtenir sur cette facette de réflexion une concentration de lumière qui donnera au faisceau d'éclairement sa portée.

A l'arrière de la pièce de référence 1200 et à son extrémité la plus éloignée du réflecteur, il est prévu des perçages pour la fixation sur ladite pièce de référence 1200 d'une pièce de maintien 1300.

En effet, le projecteur 1000 comporte ici une pièce de maintien 1300 fixée sur la pièce de référence 1200, en appui contre les faces arrière et inférieure du conduit de lumière 1100 pour maintenir par compression lesdites lames transparentes 1110, 1120, 1130 en appui contre les première et deuxième parties planes 1210, 1220, 1230 de ladite pièce de référence 1200.

Cette pièce de maintien par compression 1300, comporte une base s'étendant selon l'axe longitudinal X du conduit de lumière, dans un plan horizontal parallèle au plan de référence horizontal défini par la première partie plane horizontale de la pièce de référence. Un montant vertical s'étend le long du bord longitudinal arrière de la base horizontale, et est destiné à venir en appui contre la face arrière du conduit de lumière.

Cette pièce de maintien 1300 est fixée à la pièce de référence 1200 par un système de vis introduites dans des perçages en regard, prévus respectivement sur la pièce de maintien et sur la pièce de référence.

Selon un autre mode de réalisation non représenté, on pourra prévoir que la pièce de maintien et la pièce de référence forme une seule pièce, la pièce de maintien formant alors seulement un retour horizontal s'étendant à partir du bord inférieur de la partie plane verticale de la pièce de référence, vers l'arrière du projecteur. Ce retour horizontal se situe en-dessous du conduit de lumière et permet de maintenir le conduit de lumière plaqué contre les plans de référence de la pièce de référence.

Il peut être prévu, dans le module d'éclairage 1000, un élément élastique de pression ici non représenté , tel qu'un ressort à lame, entre le conduit de lumière et la première partie plane de la pièce de référence. Cet élément élastique de pression peut être placé entre la face interne de la partie haute de la première partie plane de la pièce de référence, et la surface supérieure de la lame transparente la plus courte 1110. Il participe au maintien par compression des lames transparentes contre la première partie plane horizontale de la pièce de référence.

Par ailleurs, comme le montre plus particulièrement la figure 5, le projecteur 1000 comporte une pièce de montage avant 1400 qui comporte deux plaques horizontales 1410, 1420 disposées parallèlement en regard l'une de l'autre et solidarisées entre elles par des montants verticaux. Des pattes de montage 1430 s'étendent à partir des montants verticaux de la pièce de montage avant 1400 et sont fixées sur la pièce de référence 1200, à chacune de ses extrémités. Les faces internes en regard des plaques de base 1410, 1420 de la pièce de montage avant 1400 comporte des rainures formant glissières pour le montage des lentilles de Fresnel 1111a, 1121a, 1122a, 1131a. Les rainures prévues pour le montage des lentilles de Fresnel présentent une certaine orientation par rapport à la direction d'éclairement E, et sont positionnées par rapport à la deuxième partie plane verticale de la pièce de référence, de façon que les lentilles de Fresnel montées dans ces rainures, la partie avant de montage étant fixée à la pièce de référence, coopèrent optiquement avec les facettes de réflexion obliques des lames transparentes montées en appui contre la pièce de référence, pour projeter dans la direction d'éclairement une image correspondant auxdites facettes.

Selon une variante de réalisation non représentée, on peut prévoir que les lentilles de Fresnel 1111a, 1121a, 1122a, 1131a forme un ensemble monobloc rendu solidaire de la pièce de référence du projecteur en étant fixé sur une patte de fixation s'étendant à partir de ladite pièce de référence vers l'avant et vers le haut du projecteur.

Pour la réalisation d'un faisceau de coupure, il peut être prévu dans le projecteur 1000, des caches disposés sur le trajet de certains faisceaux élémentaires d'au moins certaines facettes de réflexion, entre la face avant des lames transparentes considérées et les éléments dioptriques associés, lesdits caches étant solidaires de la pièce avant de montage fixée sur la pièce de référence dans une position déterminée par rapport à celle-ci.

Lesdits caches ici non représentés et la pièce de montage avant peuvent former une seule pièce. Il peut être également prévu selon un autre mode de réalisation que ces caches soient rapportés sur ladite pièce de montage avant et fixés à celle-ci par des moyens de fixation.

Il est à noter, que la pièce de référence 1200, la pièce de maintien 1300 et la pièce de montage 1400 peuvent être avantageusement réalisées par moulage en aluminium. Les lentilles de Fresnel 1111a, 1121a, 1122a, 1131a peuvent être réalisées en Poly-N-méthylméthacrylimide.

La figure 6 montre le principe de montage indexé des lames transparentes 1130, 1120, 1110 du projecteur 1000 représenté sur la figure 1.

Comme le montre plus particulièrement cette figure 6, il est prévu une platine de montage 2000 portant sur un montant latéral des piges 2001, 2002, 2003 pour le positionnement indexé des lames transparentes 1130, 1120, 1110 selon l'axe longitudinal X du conduit de lumière. Dans ce but, lesdites piges sont placées à des endroits déterminés suivant l'axe longitudinal de ladite platine 2000.

On positionne la pièce de montage 1300 sur la platine de montage 2000, puis on superpose sur la pièce de maintien 1300 les lames transparentes 1110, 1120, 1130 du conduit de lumière, suivant des longueurs décroissantes, chaque lame transparente 1130, 1120, 1110 étant positionnées de sorte qu'une de ses facettes de réflexion oblique 1131, 1121, 1111 viennent en butée contre la pige de positionnement 2001, 2002, 2003 correspondante de la platine de montage 1200.

En ce qui concerne la lame transparente intermédiaire 1120, c'est la première facette de réflexion oblique 1121 prévue sur sa face arrière qui vient en butée contre la pige correspondante 2002 de la platine de montage 2000.

Avantageusement, lors du positionnement indexé des lames transparentes, on colle lesdites lames entre elles en des endroits ponctuels pour former un bloc de lames solidaires, positionnées de manière déterminée les unes par rapport aux autres.

Un tel bloc de lames est facilement manipulable pour être monté sur la pièce de référence 1200, et résiste mieux aux chocs et au vibrations engendrés lors du roulage du véhicule.

En effet, les faibles frottements engendrés par le contact verre sur verre entre les différentes lames du conduit de lumière, constituent un problème pour la tenue aux chocs et aux vibrations du projecteur lorsque le véhicule est en roulement, car les lames de verre superposées ont tendance à glisser l'une sur l'autre et ne jouent plus alors leur rôle optique.

Le collage des lames transparentes entre elles permet de résoudre le problème précité.

Toutefois la surface prise par la colle sur lesdites lames de verre doit être la plus réduite possible de façon à ne pas altérer la fonction optique du conduit de lumière du projecteur.

Ainsi, avantageusement chaque point de colle déposé sur lesdites lames présente un diamètre compris environ entre 3 et 5 mm.

Selon l'exemple représenté sur les figures 5 et 6, la lame supérieure la plus courte 1110 est collée par un point de colle sur la lame intermédiaire 1120, elle-même collée par deux points de colle situés à chaque extrémité de ladite lame, sur la lame inférieure la plus longue 1130.

La colle utilisée pour solidariser lesdites lames de verre entre elles, est préférentiellement une colle monocomposant, réticulable au rayonnement ultraviolet, à l'humidité ou à la chaleur. Cette colle est une colle optique qui tient à des températures de l'ordre de 250°C appliquées en continu.

Avantageusement, on utilise une colle silicone du type RTV de GE ou une colle époxy du type NOA71 ou NOA65 de Epotecny.

Cette dernière est une résine monocomposant, 100% réticulable au rayonnement ultraviolet avec un maximum d'absorption dans la gamme de longueurs d'ondes allant de 350 nm à 380 nm. Sa réticulation sous rayonnement ultraviolet s'effectue en quelques secondes en fonction de l'intensité du rayonnement et de l'épaisseur du point de colle.

Avant exposition, cette colle présente une viscosité cône/plan Brookfield à 25°C, à 5 t/mn égale à 2,6 ± 20% Pa.s, et une densité égale à 1,12 g/cm³.

Après durcissement, cette colle présente une dureté de 50 à 55 Shores D, un allongement à la rupture de 80%, une résistance à la traction de 100 à 110kg/cm², un module d'élasticité de 1400 kg/cm², une transmission lumineuse( en longueur d'ondes allant de 400 à 1000 nm) supérieure à 98%, un indice de réfraction égal à 1,52 et une température de dégradation comprise environ entre 330 et 350°C.

Puis, on met en place sur la superposition de lames transparentes 1130, 1120, 1110, collées entre elles, la pièce de référence (non représentée sur la figure 6) de sorte que d'une part sa première partie plane horizontale couvre la surface supérieure de la lame supérieure la plus courte 1110, ainsi que la surface supérieure de la partie débordante de la lame transparente intermédiaire 1120 positionnée juste en dessous de cette dernière, et d'autre part sa deuxième partie plane verticale vienne contre les faces avant de sortie de la lumière desdites lames transparentes.

On solidarise la pièce de maintien à la pièce de référence à l'aide d'un système à vis de sorte que ladite pièce de maintien maintienne par compression lesdites lames transparentes superposées en appui contre les première et deuxième parties planes de la pièce de référence, puis on retire la platine de montage.

Selon une variante de montage non représentée qui ne comporte pas de pièce de maintien, on peut prévoir de monter le bloc de lames transparentes collées entre elles sur une pièce de référence comportant un simple retour horizontal inférieur de sorte que ce dernier se place contre au moins une partie de la surface inférieure de la lame transparente inférieure 1130 du conduit de lumière. Dans cette position le retour horizontal inférieur de la pièce de référence est placé contre une partie au moins de la surface inférieure de la lame transparente inférieure 1130 du conduit de lumière.

En référence maintenant aux figures 7 et 8 on va décrire dans le détail la fixation du conduit de lumière à la pièce de référence du projecteur selon l'invention.

Comme le montrent ces figures, pour fixer le conduit de lumière 1100 à la pièce de référence 1200 du projecteur, il est prévu deux pinces 1510 et 1520, réparties sur la longueur dudit conduit de lumière 1100, aptes à serrer entre leurs branches ladite pièce de référence 1200 et lesdites lames transparentes superposées 1110, 1120, 1130 les unes contre les autres pour former un ensemble monobloc.

Comme le montre plus particulièrement la figure 8, chaque pince 1510 est une lame ressort conformée en « U » avec une branche supérieure 1511 positionnée contre la face externe de la partie basse 1220 de la première partie généralement plane horizontale de la pièce de référence 1200, et une branche inférieure 1512 positionnée contre la face inférieure du conduit de lumière.

La branche supérieure 1511 de chaque pince 1510 présente un retour vertical 1511a apte à se positionner en butée contre une partie supérieure de la face avant de la partie verticale 1230 de la pièce de référence ( voir figure 8). Ce retour vertical 1511a participe au blocage de chaque pince 1510 sur la pièce de référence.

Ainsi positionnée chaque pince exerce par déformation élastique une force de pression sur la lame intermédiaire 1120 et la lame inférieure 1130 superposées.

De plus, chaque pince 1510 comprend une première surface interne 1513 opposée à ladite première partie généralement plane horizontale 1220 de la pièce de référence, et une deuxième surface interne 1514 opposée à ladite deuxième partie généralement plane verticale 1230 de la pièce de référence, qui comportent chacune un bossage 1513a, 1514a exerçant une force de poussée sur les lames transparentes juxtaposées dudit conduit de lumière pour les maintenir en appui contre les première et deuxième parties généralement planes 1210, 1220, 1230 de ladite pièce de référence 1200, dans une position déterminée selon l'axe longitudinal X dudit conduit de lumière 1100, de sorte que leur(s) facette(s) de réflexion 1111, 1121 coopèrent optiquement avec lesdits éléments dioptriques 1111a, 1121a pour que les images des facettes projetées par ceux-ci dans la direction d'éclairement soient positionnées de manière déterminée.

Les première et deuxième surfaces internes 1513, 1514 de chaque pince 1510 sont respectivement une surface horizontale inférieure 1513 venant en appui contre la surface inférieure du conduit de lumière, et une surface verticale arrière 1514 venant en appui contre les faces arrières des lames transparentes.

Les bossages 1513a, 1514a viennent de formation avec chaque pince ou sont rapportés sur chaque pince.

Selon une variante de réalisation non représentée, chaque pince vient de formation avec la pièce de référence. Dans ce cas chaque pince comprend seulement une partie arrière verticale qui s'étend à partir de la partie basse horizontale de ladite pièce de référence, cette partie arrière verticale comprenant le bossage interne et venant s'appuyer contre les faces arrières des lames transparentes, ainsi qu'une partie inférieure horizontale munie intérieurement d'un bossage et venant se plaquer par déformation élastique contre la surface inférieure du conduit de lumière.

chaque pince est réalisée par moulage en aluminium tout comme la pièce de référence.

En outre, il est prévu un élément souple compressible 1600 entre le conduit de lumière 1100 et la première partie plane horizontale 1220 de la pièce de référence 1200. Cet élément souple compressible est un patin de silicone 1600 apte à être comprimé d'environ 20% de son épaisseur sous l'effet du pincement de la pièce de référence et desdites lames transparentes dans chaque pince. A l'état dilaté, il présente une épaisseur d'environ 10 mm et à l'état comprimé une épaisseur égale à environ 8 mm.

Cet élément souple compressible permet d'augmenter encore les forces de frottement entre les lames transparentes superposées, ce qui augmente la stabilité du module d'éclairage lors du fonctionnement du véhicule.

Le système de montage du conduit de lumière du projecteur 1000, permet de bien positionner les faces de sortie de lumière des lames transparentes, ainsi que les facettes de réflexion obliques prévues à l'extrémité et éventuellement sur la face arrière desdites lames transparentes, par rapport à deux plans de référence de façon à ce que lesdites facettes coopèrent optiquement avec les lentilles pour que les images desdites facettes projetées par les lentilles dans la direction d'éclairement soient positionnées de façon déterminée pour la formation du faisceau d'éclairement normalisé. Ce positionnement par rapport à deux plans de référence permet de s'affranchir des écarts dus à la tolérance de fabrication des lames individuelles.

En outre, avantageusement, le fait que les lentilles de Fresnel et les caches soient solidaires d'une même pièce de montage positionnée de manière déterminée par rapport à la plaque de référence, permet d'assurer un bon positionnement relatif desdites lentilles et desdits caches et ce quels que soient les phénomènes de dispersion et de dilatation qui peuvent intervenir lors du fonctionnement du module d'éclairage. Les lentilles et les caches sont également bien positionnés par rapport aux faces de sortie des lames transparentes, et auxdites facettes de réflexion obliques. Dans tous les cas, la pièce avant de montage permet de conserver le positionnement relatif des lentilles et des caches, ce qui permet d'obtenir une coupure nette du faisceau d'éclairage.

De plus, le collage des lames transparentes entre elles permet d'assurer une bonne tenue du conduit de lumière aux chocs et aux vibrations dus au roulement.

En outre, le maintien desdites lames solidaires par les pinces sur la pièce de référence permet d'assurer une bonne tenue du conduit de lumière aux chocs et aux vibrations dus au roulement. Avec un tel système, il n'est pas nécessaire de prévoir sur la face d'entrée desdites lames une pièce de blocage des lames pour les maintenir en position selon l'axe longitudinal du conduit de lumière, et on ne perd pas ainsi de flux de lumière émis par le réflecteur.

La présente invention n'est nullement limitée aux modes de réalisation décrits et représentés, mais l'homme du métier saura y apporter toute variante conforme à son esprit.

## Revendications

1. Projecteur (1000) pour véhicule automobile, comprenant une source lumineuse réelle, des moyens (1001) pour concentrer le rayonnement lumineux issu de cette source sur l'extrémité d'un conduit de lumière (1100) constitué par une pluralité de lames transparentes juxtaposées (1110, 1120, 1130) selon au moins une direction, chaque lame transparente s'étendant selon l'axe longitudinal (X) dudit conduit de lumière et comportant au moins à son extrémité la plus éloignée de la source lumineuse réelle, une facette de réflexion oblique (1111), lesdites facettes constituant autant de sources lumineuses virtuelles et étant disposées de manière à coopérer optiquement avec des éléments dioptriques d'axe parallèle à la direction d'éclairement pour que ceux-ci projettent dans cette direction, des images correspondant aux facettes, caractérisé en ce que les lames transparentes (1110, 1120, 1130) sont collées entre elles en des endroits ponctuels.

2. Projecteur (1000) selon la revendication 1, caractérisé en ce que chaque point de colle présentant un diamètre compris environ entre 3 et 5 mm.

3. Projecteur (1000) selon la revendication 1, caractérisé en ce que les lames transparentes (1110, 1120, 1130) présentant des longueurs différentes, la lame transparente supérieure la plus courte (1110) est collée par un point de colle sur la lame transparente inférieure (1120), chaque lame transparente intermédiaire (1120) étant collé sur une autre lame par deux points de colle situés à chaque extrémité de ladite lame.

4. Projecteur (1000) selon l'une des revendications 1 à 3, caractérisé en ce que la colle utilisée est une colle monocomposant réticulable au rayonnement ultraviolet, à l'humidité ou à la chaleur.

5. Projecteur (1000) selon la revendication 4, caractérisé en ce que la colle est une colle époxy.

6. Projecteur (1000) selon la revendication 4, caractérisé en ce que la colle est une colle silicone.

7. Projecteur ( (1000) selon l'une des revendications 1 à 6, caractérisé en ce que lesdites lames transparentes (1110, 1120, 1130) so;,t réalisées en verre.

8. Projecteur ( (1000) selon l'une des revendications précédentes, caractérisé en ce qu'il comporte une pièce de référence (1200) pour le montage dudit conduit de lumière (1100), et au moins une pince (1510, 1520) apte à serrer lesdites lames transparentes juxtaposées (1110, 1120, 1130) contre ladite pièce de référence pour former un ensemble monobloc.

9. Projecteur (1000) selon la revendication 8, caractérisé en ce que la pièce de référence (1200) comprend une première partie généralement plane horizontale (1210, 1220) définissant un plan de référence horizontal, et une deuxième partie généralement plane verticale (1230), s'étendant suivant l'axe longitudinal (X) du conduit de lumière (1100) et définissant un plan de référence vertical, et en ce que chaque pince (1510) comprend une première surface interne (1513) opposée à ladite première partie généralement plane horizontale (1220), et une deuxième surface interne (1514) opposée à ladite deuxième partie généralement plane verticale (1230), lesdites première et deuxième surfaces internes (1513, 1514) de chaque pince (1510) comportant un bossage (1513a, 1514a) exerçant une force de poussée sur les lames transparentes juxtaposées dudit conduit de lumière pour les maintenir en appui contre les première et deuxième parties généralement planes (1210, 1220, 1230) de ladite pièce de référence (1200), dans une position déterminée selon l'axe longitudinal (X) dudit conduit de lumière (1100), de sorte que leur(s) facette(s) de réflexion (1111, 1121) coopèrent optiquement avec lesdits éléments dioptriques (1111a, 1121a) pour que les images des facettes projetées par ceux-ci dans la direction d'éclairement soient positionnées de manière déterminée.

10. Projecteur (1000) selon la revendication 9, caractérisé en ce que la première partie plane horizontale (1210, 1220) de la pièce de référence (1200) est une partie supérieure contre laquelle s'appuie au moins une partie de la surface supérieure du conduit de lumière (1200) et la deuxième partie plane verticale (1230) de la pièce de référence est une partie avant ajourée contre laquelle s'appuient les faces avant de sortie de la lumière des lames transparentes (1110, 1120, 1130) du conduit de lumière (1100), et en ce que les première et deuxième surfaces internes (1513, 1514) de chaque pince (1510) sont respectivement une surface horizontale inférieure (1513) venant en appui contre la surface inférieure du conduit de lumière, et une surface verticale arrière (1514) venant en appui contre les faces arrières des lames transparentes.

11. Projecteur (1000) selon l'une des revendications 9 ou 10, caractérisé en ce que chaque pince (1510) est une lame ressort conformée en « U » avec une branche supérieure (1511) positionnée contre la face externe de la première partie plane horizontale (1220) de la pièce de référence (1200), et une branche inférieure (1512) positionnée contre la face inférieure du conduit de lumière.

12. Projecteur (1000) selon l'une des revendications 9 à 11, caractérisé en ce que les bossages (1513a, 1514a) viennent de formation avec chaque pince (1510).

13. Projecteur (1000) selon l'une des revendications 9 à 11, caractérisé en ce que les bossages (1513a, 1514a) sont rapportés sur chaque pince.

14. Projecteur (1000) selon l'une des revendications 8 à 12, caractérisé en ce que chaque pince (1510) vient de formation avec la pièce de référence.

15. Projecteur (1000) selon l'une des revendications 8 à 14, caractérisé en ce qu'il est prévu un élément souple compressible entre le conduit de lumière et la première partie plane horizontale de la pièce de référence.

16. Projecteur (1000) selon la revendication 15, caractérisé en ce que l'élément souple compressible est un patin de silicone (1600) apte à être comprimé d'environ 20% de son épaisseur sous l'effet du pincement de la pièce de référence et desdites lames transparentes dans chaque pince.

17. Projecteur (1000) selon l'une des revendications 8 à 16, caractérisé en ce que la première partie plane horizontale de la pièce de référence (1200), comporte une partie plane haute (1210) et une partie plane basse (1220) horizontales, parallèles et raccordées par un décrochement (1250), chaque pince agissant sur ladite partie plane basse et sur le conduit de lumière.

18. Projecteur (1000) selon la revendication 17, caractérisé en ce que la partie plane haute horizontale (1210) de la pièce de référence présente un bord d'extrémité en biais (1211) qui porte une pige pour le positionnement selon l'axe longitudinal (X) du conduit de lumière, de la lame transparente directement en appui contre la partie plane haute horizontale (1210) de ladite pièce de référence (1200).

19. Projecteur (1000) selon l'une des revendications 8 à 18, caractérisé en ce qu'il est prévu deux pinces (1510, 1520) réparties sur la longueur du conduit de lumière.

20. Projecteur (1000) selon l'une des revendications 8 à 19, caractérisé en ce que les lames transparentes sont collées à chaque pince (1510,1520).

21. Projecteur (1000) selon l'une des revendications 8 à 20, caractérisé en ce que les lames transparentes sont collées à la pièce de référence.

22. Projecteur (1000) selon l'une des revendications 8 à 21, caractérisé en ce que la pièce de référence (1200) est réalisée par moulage en aluminium.

23. Projecteur (1000) selon l'une des revendications 1 à 22, caractérisé en ce que chaque pince est réalisée par moulage en aluminium.

24. Projecteur (1000) selon l'une des revendications 1 à 22, caractérisé en ce que les éléments dioptriques sont des lentilles de Fresnel (1111a, 1121a, 1122a, 1131a) réalisées en Poly-N-méthylméthacrylimide.
